# EUROPÄISCHE PATENTSCHRIFT

(11) **EP 2 999 670 B1**
(45) Veröffentlichungstag und Bekanntmachung des Hinweises auf die Patenterteilung: **15.01.2020**
(21) Anmeldenummer: 14730765.6
(22) Anmeldetag: 23.05.2014
(51) Int. Cl.: C02F 3/06, C02F 3/10, C02F 1/28, C02F 103/00, C02F 101/10, C02F 101/16, C02F 3/12

(54) **WASSERREINIGUNG MIT XYLITFASERN**
WATER PURIFICATION USING XYLITOL FIBRES
PURIFICATION D'EAU AU MOYEN DES FIBRES DE XYLITOL

(30) Priorität: 23.05.2013 DE 102013209632
(43) Veröffentlichungstag der Anmeldung: 30.03.2016
(73) Patentinhaber: Roess Nature Group GmbH & Co. KG, 27239 Twistringen (DE)
(72) Erfinder: ROESS, Thomas, 27239 Twistringen (DE); NEISSER, Reinhold, 57392 Schmallenberg (DE)
(74) Vertreter: Eisenführ Speiser
(86) Internationale Anmeldenummer: PCT/EP2014/060659
(87) Internationale Veröffentlichungsnummer: WO 2014/187954

(56) Entgegenhaltungen:
- DE-A1- 3 018 086
- DE-A1- 19 754 175
- DE-A1-102006 016 715
- DE-A1-102008 022 388
- DE-C1- 19 702 521
- DE-U1-202011 109 127
- US-A1- 2008 251 450
- Robert Frank: "Neue Landschaft", , 31. Juli 2011 (2011-07-31), Seiten 1-72, XP055143279, Patzer Verlag ISSN: 0548-2836 Gefunden im Internet: URL:http://neuelandschaft.de/Service/ARCHI V/tabid/54/language/de-DE/Default.aspx [gefunden am 2014-09-29]
- Robert Frank: "Neue Landschaft", , 31. Mai 2012 (2012-05-31), XP055143321, Patzer Verlag ISSN: 0548-2836 Gefunden im Internet: URL:http://neuelandschaft.de/de-de/service /archiv.aspx [gefunden am 2014-09-29] in der Anmeldung erwähnt
- ULRIKE BÖHMER ET AL: "White-rot fungi combined with lignite granules and lignitic xylite to decolorize textile industry wastewater", ENGINEERING IN LIFE SCIENCES, Bd. 10, Nr. 1, 1. Februar 2010 (2010-02-01), Seiten 26-34, XP055143249, ISSN: 1618-0240, DOI: 10.1002/elsc.200900024

## Beschreibung

Die vorliegende Erfindung betrifft eine Vorrichtung und ein System zur Wasserreinigung mit Einsatz von Xylitfasern, wobei die Einrichtung zur Wasserreinigung eine Kläranlage nach dem SBR-Verfahren (Seequenzielle biologische Reinigung) ist, welche wenigstens zwei Kammern aufweist.

Als Stand der Technik sei zunächst allgemein hingewiesen auf WO 2006/100065. In diesem Dokument wird der Einsatz von Xylitfasern für verschiedene Anwendungszwecke bereits beschrieben, u. a. auch die Verwendung von Xylit in der Ingenieurbiologie und in der Umweltschutztechnik, z. B. als Biofilter, Naturfilter, Stoff zur Schadstoffreduzierung etc. Dabei geht es jedoch im Wesentlichen um den Einsatz von Xylit in verschiedensten Formen innerhalb des Bodens. Vor allem offenbart das Dokument die Ausbildung von Gewebe, Vlies, Matten, Wattekörpern, Faschinen, geformten Körpern, Fäden, Garnen, Seilen, schlauchartigen Formkörpern oder dergleichen aus Xylit.

Als Stand der Technik sei weiter genannt: DE 10 2006 016 715 A1; DE 197 54 175 A1; Robert Frank, "Xylitwalzen zur Wasserreinigung in Teichanlagen", Neue Landschaft, 2012, H5; S. 442-46; DE 10 2008 022 388 A1; DE 20 2011 109 127 U1.

Schließlich wird als weiterer Stand der Technik auch hingewiesen auf US 2008/251450 A1. In diesem Dokument wird die Verwendung von frischer Holzfaser (Holzpulpe) in einer für die Wasserreinigung vorgeschlagen. Hingewiesen wird auch auf den Stand der Technik gemäß Ulrike Böhmer et al: "White-rot fungi combined with lignite granules and lignitic xylite to decolorize textile industry wastewater", Engineering in Life Science, Bd. 10. Nr. 1, 1. Februar 2010, Seiten 26-34, XP055143249. In diesem Dokument wird vorgeschlagen, einen bestimmten Pilz auf einem Granulat gebildet aus Vermahlungsxylit anzusiedeln.

Gegenüber dem bekannten Stand der Technik besteht die Aufgabe nunmehr darin, den Einsatz von Xylit für weitere Anwendungen vorzusehen und insbesondere auch Einrichtungen vorzuschlagen, mittels denen die neue Anwendung eine überzeugende Lösung, insbesondere im Bereich der Reinigung von Wasser, bereitstellt.

Dabei soll insbesondere erfindungsgemäß eine Lösung vorgeschlagen werden, die die Wasserreinigung in Abwasser-Behandlungsanlagen erlaubt.

Erfindungsgemäß wird eine Kläranlage mit den Merkmalen nach Anspruch 1 vorgeschlagen. Vorteilhafte Weiterbildungen sind in den Unteransprüchen beschrieben.

Es kann eine Struktur ausgebildet werden, die einen Hohlraum aufweist, in welchem Xylitfasern untergebracht werden. Die gesamte Struktur wird zur Wasserreinigung in das Wasser eingelassen und kann, weil die Struktur außenseitig Öffnungen zur Durchströmung von Wasser aufweist, vom Wasser gut durchströmt werden, so dass das zu reinigende Wasser mit dem in der Struktur befindlichen Xylit in Kontakt treten kann. Die Xylitfaser, die ein idealer Trägerstoff für Mikroorganismen ist, die sich automatisch auf der Xylitfaser ansiedeln und diese auf der Xylitfaser angeordneten Mikroorganismen idealerweise geeignet sind, die im Wasser gelösten Schadstoffe, Nährstoffe usw., z. B. Phosphor, Nitrat etc., zu binden, wird somit das verunreinigte Wasser gereinigt. Es ist auch möglich, die Xylitfaser bewusst mit Mikroorganismen zu dotieren, also dort anzusiedeln, um den Reinigungseffekt nochmals zu verbessern.

Damit die Xylitfaser nicht mit dem Wasser aus der Struktur herausströmt, sind Mittel ausgebildet, um die Xylitfaser in der Struktur festzuhalten. Ein Mittel kann beispielsweise eine Art Sack sein, in welchem die Xylitfaser lose untergebracht wird, wobei der Sack jedoch verschlossen ist und der Sack innerhalb der Struktur angeordnet ist.

Statt eines Sacks, z. B. aus Vliesmaterial, Kunststoffmaterial etc. ist es auch möglich, aus einem Draht, z. B. Maschendraht oder dergleichen, eine Art Behältnis (z. B. Gabione) auszubilden, welches mit Xylitfaser befüllt wird und wobei das Behältnis dann verschlossen wird. Dabei kann wiederum ein Vlies an der Innenseite des Behälters ausgebildet werden, um ein Herausströmen auch feiner Xylitfasern zu verhindern, wenn die gesamte Struktur und somit das gesamte Xylit von Wasser durchströmt wird.

Auch ist es möglich, innerhalb der Struktur einen Behälter auszubilden, z. B. aus Kunststoff oder dergleichen, welcher kleine Öffnungen aufweist, so dass der Behälter von Wasser durchströmt werden kann und in dem Behälter wird dann Xylit untergebracht.

Es ist ebenfalls möglich, dass das Xylit innerhalb der Struktur als Formkörper eingebracht wird, z. B. als geformte Walze, Matte, Quader, Faschine oder dergleichen, wobei dies dadurch geschieht, dass die Xylitfasern zu einem Formkörper geformt werden und durch Nähen, Versteppen oder dergleichen zu dem gewünschten Formkörper geformt werden, so dass wiederum die einzelnen Xylitfasern im Formkörper festgehalten sind, wenn dieser vom Wasser durchströmt wird.

Dies hat den Vorteil, dass nicht nur die einzelnen Xylitfasern festgehalten werden, sondern dass diese dann, wenn die Xylitfasern verbraucht sind und/oder die Abbauwirkung der Mikroorganismen auf den Xylitfasern nachlässt (z. B. weil die Xylitfaser ihre Trägerfunktion nicht mehr hinreichend aufrecht erhalten kann), also ihre biologische/chemische/physikalische Funktion der Wasserreinigung nicht mehr erfüllen können, weil die Abbauleistung der Mikroorganismen erschöpft ist.

Dazu wird das Behältnis mit der Xylitfaser, der Drahtkorb mit der Xylitfaser oder der Vliessack mit der Xylitfaser oder der Xylitfaserkörper aus der Struktur herausgenommen und durch einen neuen ersetzt.

Insbesondere ist Xylitfaser auch geeignet, um in einer Kläranlage, insbesondere einer Kleinkläranlage mit Mehrkammersystem zum Einsatz zu kommen. Die einzelnen Kammern werden dabei vom Abwasser durchströmt und dabei können die an den Xylitfasern angesiedelten Mikroorganismen dem Wasser die Schad- und Nährstoffe weitgehend entziehen, in jedem Fall aber den Gehalt der Schad- und Nährstoffe im Wasser deutlich reduzieren. Die Erfindung ist nachfolgend anhand eines Ausführungsbeispiels näher erläutert.
- Fig.1: zeigt eine nicht zur Erfindung gehörige Lösung in einem Teich,
- Fig. 2: zeigt eine nicht zur Erfindung gehörige Lösung an einem fließenden Gewässer, z. B. einem Bach, Fluss oder dergleichen,
- Fig. 3: zeigt das Prinzip einer erfindungsgemäßen Lösung bei einer Kläranlage.

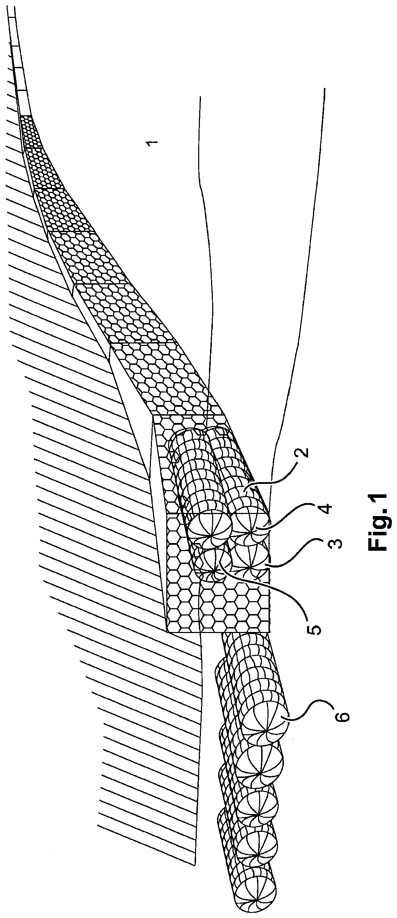

Fig. 1 zeigt die Aufsicht auf einen Ausschnitt eines Teichs. Insbesondere Teiche, die in landwirtschaftlichen Gebieten liegen, werden regelmäßig durch den Eintrag von Nährstoffen, insbesondere von Phosphat, Nitraten usw. oftmals so stark mit diesen Nährstoffen überfrachtet, dass sie zu sehr starker Algenbildung neigen und in Folge der "Überdüngung" ganz "umkippen" können.

Es ist zu sehen, dass in dem Teich 1 einerseits Gabionen 2 ausgebildet sind, die außenseitig eine allseitige Drahtstruktur 3 ausbilden, wobei bevorzugt die Drahtstruktur an einer Seite zum Befüllen oder Entnehmen der im Inneren der Gabionen ausgebildeten Xylitwalzen 4 zu öffnen bzw. zu verschließen ist.

Die Xylitwalzen 4 sind schlauch- (wurst-) artige Körper, die z. B. außenseitig eine Netzstruktur 5 aufweisen können und im Inneren mit Xylitfasern gefüllt sind und die zur Verhinderung, dass die einzelnen Xylitfasern die schlauchartige Struktur bei Wasserdurchströmung verlassen, insbesondere an ihrer Außenseite mit einem feinen Gewebe, Draht oder dergleichen umhüllt sind, so dass der sichere Schutz, dass die Xylitfasern bei Durchströmen von Wasser innerhalb des Walzenkörpers verbleiben, aber gleichzeitig auch gut durchströmt werden können, gewährleistet ist.

In der Figur 1 ist zu sehen, dass gleich mehrere Gabionen 2 hintereinander aufgestellt sind, so dass sehr viele Walzenkörper in dem Teich sicher untergebracht werden können und durch die Unterbringung der Gabionen wird auch sicher verhindert, dass der gesamte Gabionenkörper mit den Walzen zur Wasseroberfläche aufschwemmen kann.

Wenn nach gewisser Zeit die Abbauleistung der Mikroorganismen (die sich an den Xylitfasern der Xylitwalzen etc. angesiedelt haben) soweit nachgelassen hat, dass keine nennenswerte Reduzierung der Schadstoff- und/oder Nährstoffgehalte mehr zu erwarten ist, ist der Austausch der Xylitwalzen relativ einfach möglich, indem entweder die einzelnen Walzen 6 aus dem Wasser entnommen werden oder die einzelnen Walzen 4 aus der Gabione 2 entnommen werden oder ganze Gabionen 2 mit den Walzen 4 aus dem Wasser herausgenommen werden.

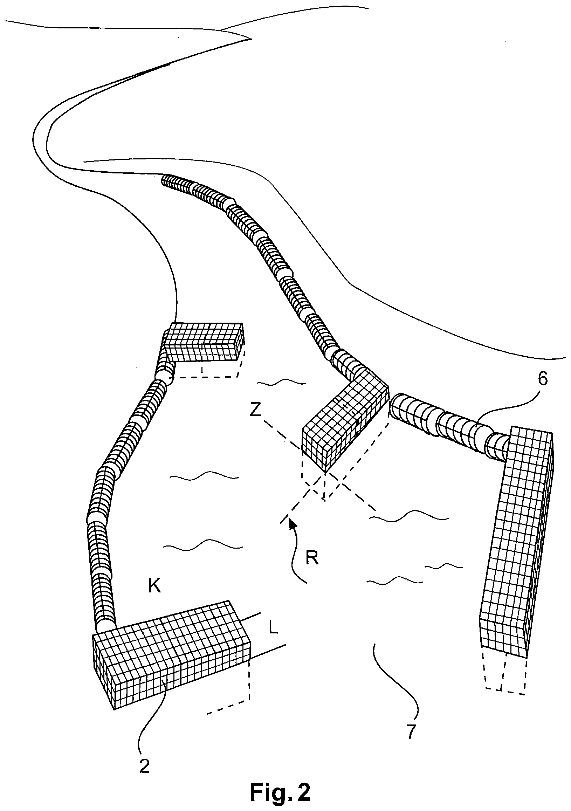

Eine der zuvor vorgestellten Lösung ähnliche Lösung ist in Fig. 2 gezeigt, jedoch für ein Fließgewässer 7.

Dort ist zu erkennen, dass die Walzenkörper 6 teilweise im Wasser liegen, teilweise auch aus dem Wasser herausragen. Gleiches gilt für die dort gezeigten Gabionen 2, welche im dargestellten Beispiel zu ca. 2/3 im Wasser eingetaucht sind (wie in Fig. 1) und zu ca. 1/3 aus dem Wasser herausragen.

Durch diese Ausbildung gibt es insbesondere den Vorteil, dass zusätzlich innerhalb des Flussbetts auch die Möglichkeit für Tiere besteht, sich auf den Walzenkörpern bzw. auf den Gabionen niederzulassen. Gleichzeitig wird aber das gesamte Xylitmaterial gut vom Wasser durchströmt und kann somit aktiv einen Beitrag zur Säuberung des Wassers leisten.

Durch die Ausbildung der Gabionen 2, die eine bestimmte Längsrichtung L-L aufweisen und somit wie im gezeigten Beispiel quer zur Flussrichtung R angeordnet sind, wird erreicht, dass sich auch der Strömungsverlauf in der gewünschten Weise ändert und sich somit Ruhezonen (Kolke) K ebenso wie schnell fließende Zonen Z bilden und sich somit die Wasserdurchmischung insgesamt erhöht und dadurch wiederum der Reinigungseffekt durch die Xylitwalzen 6 bzw. Gabionen 2, in denen sich die Xylitwalzen 4 befinden, verbessert.

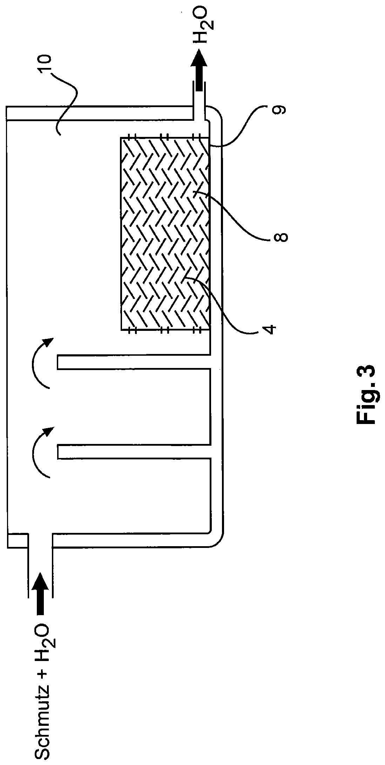

Fig. 3 zeigt das Beispiel eines 3-Kammer-Kläranlagensystems, wobei die Xylitfasern 8 innerhalb einer geformten Struktur 9 nur in der dritten Kammer 10 untergebracht sind. Auch dort werden diese Xylitkörper 4 bzw. Behälter mit Xylit wiederum vom Abwasser durchströmt und das Wasser kann somit durch die Tätigkeit der Mikroorganismen gereinigt werden. Es ist auch möglich, die Xylitfasern lose in die Kammer einzufüllen, es muss dann jedoch Sorge dafür getragen werden, dass mit der Bewegung des Wassers die Xylitfasern in der Kammer verbleiben. Dies kann beispielsweise durch einen Behälter gewährleistet sein, welcher in die Kammer eingelassen wird und welcher von dem Wasser durchströmt werden kann, der jedoch insbesondere an der Ausgangsseite Filter aufweist, die das Ausströmen der Xylitfaser aus dem Behälter und damit aus der Kammer verhindern.

In allen vorgenannten Fällen wird dabei durch Ausbildung einer entsprechenden Umhüllung für die Xylitfaser verhindert, dass mit der Strömung Xylitfasern abtransportiert werden. Diese Umhüllung kann ganz verschiedenartig ausfallen, z. B. durch die Ausbildung eines Korbs, Behälters, Sacks oder dergleichen aus Vliesmaterial oder auch Drahtmaterial, Kunststoffnetz oder Kunststoffgitter (dann jedoch sehr engmaschig), in dessen Inneren das Xylit untergebracht wird und wobei dieser Sack dann verschlossen wird und in die Gabione oder in die Kammer gelegt wird.

Das hat dann besonders den Vorteil, dass ein sehr einfacher Austausch des alten, verbrauchten Xylitmaterials durch neues, unverbrauchtes Xylitmaterial möglich ist, indem der Sack mit dem verbrauchten Xylitmaterial herausgenommen wird und durch einen neuen mit frischem Xylitmaterial ersetzt wird. Lose eingefülltes Xylit kann durch eine Absaugvorrichtung aus dem Behälter, der das Xylitfasermaterial aufnimmt, entfernt werden.

Es ist jedoch auch möglich, den Sack (also das Behältnis) zu öffnen, das verbrauchte Xylitmaterial zu entnehmen und durch neues zu ersetzen und den Sack anschließend wiederum in die Kammer oder in die Gabione zurückzulegen.

Statt der beschriebenen und gezeigten Walzen 4, 6 ist es auch möglich, dass aus dem Xylitmaterial Quader oder Matratzen oder dergleichen gebildet werden (z. B. durch Vernähen, Versteppen und dergleichen), so dass diese Strukturen die einzelnen Xylitfasern sicher festhalten. Diese Matratzen werden dann flach in das Gewässer gelegt oder sie werden erfindungsgemäß zu einer Rolle aufgerollt und dann als Rolle fixiert und somit in das Gewässer gelegt.

Wie aber auch aufgezeigt, können solche Matratzen in der flachen Form oder auch aufgerollt in einen allseitig geschlossenen Behälter wie z. B. einer Gabione, einer Flussmatratze, einen Betonbehälter, einen Kunststoffbehälter, einen Stahlbehälter oder dergleichen gelegt werden, wobei nur dafür zu sorgen ist, dass der Behälter gut vom Wasser durchströmt werden kann.

Wie ebenfalls gezeigt, können die Xylitfasern in walzenförmigen Strukturen aus einer allseitig durchlässigen Maschenstruktur untergebracht werden, sogenannte "Senkwalzen" oder "Sackgabionen", welche dann in das Gewässer abgelassen werden.

Es ist auch möglich und vorteilhaft, zusätzlich zu dem Xylitmaterial anderes Material, wie z. B. Schlacke einzubringen, die zusätzlich die Reduzierung von Phosphat dauerhaft unterstützt. Es ist auch möglich, darüber hinaus noch Naturfasermaterial mit einzubringen, z. B. Kokosfaser, Holzfaser oder dergleichen, um z. B. einen (kurzfristigen) Reinigungseffekt zu unterstützen (dieser Reinigungseffekt lässt dann nach, wenn die Kokosfaser, Holzfaser etc. verrotten und somit keine Basis mehr für die angesiedelten Mikroorganismen darstellen).

Darüber hinaus ist es ebenfalls möglich, in den Behältern zusätzlich zu den Xylitfasern noch Gewichte, z. B. Steinmaterial oder Schlacke anzulagern, was einerseits zur Beschwerung der gesamten Struktur führt und somit einem unerwünschten Aufschwemmen der Struktur begegnet und andererseits werden dadurch auch weitere Hohlräume zwischen den Steinen geschaffen, zwischen denen sich einerseits die Fasern verklemmen können und gehalten werden und andererseits können gerade in solchen Hohlräumen wiederum Organismen angesiedelt werden, die den gesamten Reinigungsprozess nochmals verbessern. Durch die intensive Besiedelung von Xylitfasern können somit Bereiche mit biologischer Aktivität innerhalb des Gewässers entstehen. Da die Xylitfaser eine hohe Verrottungsresistenz aufweist, kann sie ihre Wirkung über einige Zeit, möglicherweise sogar über Jahrzehnte, gewährleisten.

Man kann also wie folgt zusammenfassen: Es wird ein Xylitfaservolumen geschaffen, wobei dafür gesorgt wird, dass die einzelnen Xylitfasern innerhalb des Volumens festgehalten werden. Dies kann geschehen, indem mittels der Xylitfaser ein Formkörper gebildet wird (z. B. innerhalb eines Sacks, aber auch durch Vernähen, Versteppen, Stricken, Wirken, Weben, Flechten etc.) oder die Xylitfaser innerhalb eines (sackähnlichen) Behältnisses untergebracht wird oder gleich in einem quaderförmigen oder zylindrischen Behälter untergebracht wird, der ausreichend Öffnungen aufweist, die ein Durchströmen ermöglichen, wobei jedoch dafür Sorge getragen wird, dass die Xylitfasern innerhalb des Behälters festgehalten werden, z. B. durch Feinfilter vor den Öffnungen des Behälters.

Ferner ist dafür Sorge getragen, dass der Xylitfaserkörper oder das Behältnis mit Xylitfaser leicht auszutauschen ist, so dass verbrauchtes Xylitmaterial einfach, günstig und schnell durch neues, unverbrauchtes Xylitmaterial ersetzt werden kann.

Gleichzeitig kann individuell durch Verdichtung des Xylitmaterials nicht nur mehr Xylitmaterial innerhalb eines bestimmten Volumens untergebracht, sondern auch die Strömungsgeschwindigkeit bestimmt werden.

Soweit in der vorliegenden Erfindung von der Verwendung von Xylitfasermaterial die Rede ist, ist damit Xylitfasermaterial gemeint, welches eine Feinheit aufweist, die im Bereich von 100 bis 1000 tex liegt (gemessen nach ISO 11 44 bzw. DIN 60905).

Das bedeutet, dass das verwendete Xylitfasermaterial zu mehr als 50% oder 70%, vorzugsweise zu mehr als 80% bis 90%, den angegebenen Feinheitsgrad aufweist, der etwa im Bereich von 100 bis 1000 tex liegt.

Schließlich wird vorgeschlagen, dass die Xylitfaser - ganz unabhängig von der vorliegend beschriebenen Lösung - dazu verwendet wird, in einem Druckbehälter, in dem Rohre verlegt sind, die radiale Öffnungen aufweisen und die mit Xylitfasermaterial ummantelt sind, untergebracht zu werden. Ein weiteres gutes Beispiel ist dafür auch die Ummantelung von Drainagerohren mit Xylitfasern. Dabei wird die Xylitfaser wie bisherige Kokosfasern, Textilfetzen, Textilfasern usw. an Drainagerohren befestigt, z. B. durch eine Kreuzwicklung eines Garnmaterials, vorzugsweise aus Kunststoff oder dergleichen. Die Drainagerohre führen bekanntlich zur Drainierung von Flächen das Oberflächenwasser gezielt in tieferliegende Gräben ab. Indem nunmehr die mit Xylit ummantelten Drainagerohre in das Erdreich verlegt werden, siedeln sich auch dort die Mikroorganismen an, die auf den Abbau von Nährstoffen wie z. B. Phosphaten, Nitraten etc. oder Schadstoffen, die sich im zu drainierenden Wasser befinden, spezialisiert sind. Die Mikroorganismen lagern dabei diese Nährstoffe an und "verbrauchen" diese Nährstoffe für ihr eigenes Wachstum, so dass diese Nährstoffe in dem Wasser, welches das Drainagerohr durchfließt, nicht mehr enthalten sind.

Es gibt auch die Möglichkeit mit einer Einrichtung zur Wasserreinigung, insbesondere fließende oder stehende Gewässer, wobei die Einrichtung ein Steinmatratzennetz ist, also ein Netzgewebe ist (durchaus auch großmaschig), welches einen Behälter bildet, in welchen Steine gefüllt sind und das Netz bildet nicht nur den Behälter für die Steine, sondern auch für die Xylitfasern, die in dem Steinmatratzennetz untergebracht sind, z. B. auch zwischen den Steinen, die eine Struktur bilden, verklemmt sind.

Bei einer solchen Einrichtung füllen die in die Steinmatratze gebrachten Xylitfasern insbesondere die Hohlräume aus, die sich aufgrund der unregelmäßigen Form und Struktur der Natursteine zwischen diesen ergeben.

Bei den Steinen kann es sich um Natursteine oder auch um Steine aus einem Steinbruch handeln, also vor allem Steinmaterial, welches eine unregelmäßige Außenoberfläche aufweist wie auch einen unregelmäßigen Durchmesser (Größe) aufweist. Eine Steinmatratze bzw. ein Steinmatratzennetz, von dem die vorliegende Erfindung ausgeht, ist bekannt aus DE 20 2011 109 127. Das dort offenbarte Steinmatratzennetz dient vor allem zur Befestigung von Ufern von Flussläufen, Stillgewässern, Kanälen oder dergleichen. Die Steinmatratze bzw. das Steinmatratzennetz ist nunmehr nicht nur wie aus DE-U-20 2011 109 127 mit Steinen befüllt, sondern zusätzlich ist Xylitfasermaterial mit in die Steinmatratze, also in das Steinmatratzennetz, eingebracht und dieses Xylitfasermaterial wird auch durch den Steinverbund innerhalb des Matratzennetzes festgehalten.

Mithin kann das Steinmatratzennetz nicht nur zur Uferbefestigung verwendet werden, sondern auch gleichzeitig einen Beitrag zur Wasserreinigung leisten, wenn das Wasser in dem Gewässer, in oder an dem das Steinmatratzennetz liegt, auch das Steinmatratzennetz vollständig oder teilweise umspült.

Statt des losen Einbringens der Xylitfaser in das Steinmatratzennetz ist es ebenfalls möglich, dass Xylitfaserwalzen oder andere Xylitfaserstrukturen bzw. Xylitfaserkörper (z. B. auch mit Xylifaser befüllte Säcke, Xylitfaserquader, Xylitfaserzylinder, Xylitfasermatten) mit in das Steinmatratzennetz eingebracht werden, so dass das Xylitfasermaterial bei Durchströmung mit Wasser gut im Steinmatratzennetz festgehalten werden kann.

### Bezugszeichenliste

- 1: Teich
- 2: Gabionen
- 3: Drahtstruktur
- 4: Xylitwalzen
- 5: Netzstruktur
- 6: Walzenkörper, Xylitwalze
- 7: Fließgewässer
- 8: Xylitfasern
- 9: geformte Struktur
- 10: dritte Kammer
- L-L: Längsrichtung
- R: Flussrichtung
- K: Kolke (Ruhezonen)
- Z: fließende Zonen

## Patentansprüche

1. Einrichtung zur Wasserreinigung, wobei die Einrichtung eine Kläranlage nach dem Verfahren der sequenziellen biologischen Reinigung ist, wobei die Kläranlage wenigstens zwei Kammern aufweist, wobei in wenigstens einer Kammer (10) Xylitfasern (8) untergebracht sind und Mittel (9) ausgebildet sind, die verhindern, dass die Xylitfasern bei der Durchströmung von Flüssigkeit wie Wasser in den Kammern sich aus der Kammer (10) entfernen und die Xylitfasern von einer Struktur (9) umgeben sind, die die Xylitfaser innerhalb der Struktur festhalten und das der überwiegende Teil der eingesetzten Xylitfasern (8), d.h. mehr als 50% eine Feinheit aufweist, die im Bereich von 100 bis 1000 tex, gemessen nach ISO 1144 bzw. DIN 60905, liegt.

2. Einrichtung nach Anspruch 1,
**dadurch gekennzeichnet, dass** in der Struktur (9) Mittel ausgebildet sind, die ein Auftauchen der Xylitfasern (8) an die Wasseroberfläche verhindern.

3. Einrichtung nach einem der vorhergehenden Ansprüche,
**dadurch gekennzeichnet, dass** in der Struktur (9) ein Beschwerungsmittel oder eine Platte ausgebildet ist, um die Xylitfaser (8) niederzuhalten.

4. Einrichtung nach Anspruch 2,
**dadurch gekennzeichnet, dass** das Behältnis, welches die Xylitfasern (8) aufnimmt, an der Struktur befestigt ist, um ein Aufschwimmen der Xylitfaser bzw. des Behältnisses mit der Xylitfaser zu verhindern.

5. Einrichtung nach einem der vorhergehenden Ansprüche,
**dadurch gekennzeichnet, dass** die Xylitfasern (8) in einem Behälter untergebracht sind, welcher allseitig geschlossen ist und dass der gesamte Behälterinnenraum oberseitig mit einem Deckel abgeschlossen ist und das Xylit so eingebracht ist, dass es den gesamten Hohlraum ausfüllt.

## Claims

1. A device for water purification, wherein the device is a treatment plant in accordance with the method of sequencing batch reactor, wherein the treatment plant has at least two chambers, wherein xylitol fibers (8) are accommodated in at least one chamber (10) and means are formed which prevent the xylitol fibers from being removed from the chamber (10) as a result of the flow-through of liquid, like water, in the chambers and the xylitol fibers are surrounded by a structure (9) which retains the xylitol fibers within the structure and the predominant portion of the xylitol fiber used, i.e., more than 50% has a fineness which is within the range of 100 to 1000 tex, measured in accordance with ISO 1144 or DIN 60905.

2. The device as claimed in claim 1,
**characterized in that** means which prevent surfacing of the xylitol fibers (8) at the water surface are formed in the structure (9).

3. The device as claimed in any of the preceding claims,
**characterized in that** a weight agent or a plate or the like for holding down the xylitol fiber (8) is formed in the structure (9).

4. The device as claimed in claim 2,
**characterized in that** the receptacle which accommodates the xylitol fibers (8) is attached to the structure in order to prevent flotation of the xylitol fiber or of the receptacle containing the xylitol fiber.

5. The device as claimed in any of the preceding claims,
**characterized in that** the xylitol fibers (8) are accommodated in a container which is closed on all sides and that the entire container interior is closed up with a lid on the top side and the xylitol is introduced in such a way that it fills out the entire cavity.

## Revendications

1. Dispositif de purification d'eau, dans lequel le dispositif est une station d'épuration selon le procédé de la purification biologique séquentielle, dans lequel la station d'épuration présente au moins deux compartiments, dans lequel des fibres de xylitol (8) sont abritées dans au moins un compartiment (10) et des moyens (9) sont réalisés, lesquels empêchent que les fibres de xylitol ne s'éloignent du compartiment (10) lors du passage de liquide comme de l'eau dans les compartiments et les fibres de xylitol sont entourées d'une structure (9), qui maintient les fibres de xylitol à l'intérieur de la structure, et la majeure partie des fibres de xylitol (8) utilisées, en d'autres termes plus de 50 %, présente une finesse, qui se situe dans la plage de 100 à 1000 tex, mesurée selon la norme ISO 1144 ou DIN 60905.

2. Dispositif selon la revendication 1,
**caractérisé en ce que** sont réalisés dans la structure (9) des moyens, qui empêchent que les fibres de xylitol (8) n'émergent à la surface de l'eau.

3. Dispositif selon l'une quelconque des revendications précédentes,
**caractérisé en ce qu'**un moyen de lestage ou une plaque est réalisé ou réalisée dans la structure (9) pour retenir les fibres de xylitol (8).

4. Dispositif selon la revendication 2,
**caractérisé en ce que** le récipient, lequel reçoit les fibres de xylitol (8), est fixé au niveau de la structure pour empêcher que les fibres de xylitol ou le récipient avec les fibres de xylitol ne flottent à la surface.

5. Dispositif selon l'une quelconque des revendications précédentes,
**caractérisé en ce que** les fibres de xylitol (8) sont abritées dans un contenant, lequel est fermé de tous les côtés, et que la totalité de l'espace intérieur de contenant est fermée hermétiquement côté supérieur avec un couvercle et le xylitol est introduit de telle sorte qu'il remplit la totalité de la cavité.
